# EUROPÄISCHE PATENTSCHRIFT

(11) **EP 1 995 086 B1**
(45) Veröffentlichungstag und Bekanntmachung des Hinweises auf die Patenterteilung: **19.10.2011**
(21) Anmeldenummer: 07108995.7
(22) Anmeldetag: 25.05.2007
(51) Int. Cl.: B60D 5/00, B61D 17/22

(54) **Faltenbalg-Anordnung für Gelenkfahrzeuge sowie zugehöriger Stoffboden**
Bellows assembly for articulated vehicles and related floor
Assemblage d'un soufflet pour véhicules articulés et plancher correspondant

(43) Veröffentlichungstag der Anmeldung: 26.11.2008
(73) Patentinhaber: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- EP-A- 1 568 520
- EP-A1- 0 631 890
- DE-C1- 10 238 673
- DE-U1- 20 020 061
- FR-A1- 2 785 861

## Beschreibung

Die vorliegende Erfindung betrifft zunächst gemäß dem Oberbegriff des Anspruchs 4 eine Faltenbalg-Anordnung für Gelenkfahrzeuge, mit einem etwa rechteckförmig einen Fahrzeug-Innenraum bis auf eine untere Bodenöffnung umschließenden Faltenbalg und einem die Bodenöffnung überdeckenden Stoffboden, wobei der Stoffboden aus einem flexiblen Bodentuch und mehreren Trägerstangen besteht, wobei auf den beidendig mit dem Faltenbalg verbundenen oder zu verbindenden und in etwa horizontaler Anordnung im Wesentlichen parallel voneinander beabstandeten Trägerstangen das Bodentuch unter Bildung von zwischen den Trägerstangen taschenartig durchhängenden Sickenfalten aufliegt. Eine solche Anordnung ist durch das Dokument DE 200 20 061 U1 bekannt.

Ferner betrifft die Erfindung auch gemäß dem Oberbegriff des Anspruchs 1 einen Stoffboden als Teilkomponente für eine Faltenbalg-Anordnung der beschriebenen Art.

Bei Gelenkfahrzeugen, beispielsweise Gelenkbussen, ist ein vorderer Fahrzeugteil (Vorderwagen) über ein Gelenk so mit einem hinteren Fahrzeugteil (Hinterwagen oder Nachläufer) verbunden, dass zur Dreh- bzw. Knickbewegung bei Kurvenfahrt eine vertikale Drehachse sowie zur Fahrt über Kuppen und durch Senken eine horizontale, zur Fahrtrichtung quer verlaufende Nickachse definiert sind. Dabei ist es üblich, die Fahrzeugteile im Gelenkbereich über einen Faltenbalg zu verbinden, der einerseits den Fahrzeug-Innenraum oben und seitlich zur Bildung eines Durchgangs zwischen Vorder- und Hinterwagen umschließt und andererseits die beschriebenen Relativbewegungen der Fahrzeugteile ermöglicht. Dazu besteht der Faltenbalg aus zickzackförmigen, "ziehharmonikaartigen" Materialfalten mit dem Innenraum zugewandten Innenrändern und gegenüberliegenden Außenrändern. Üblicherweise sind auf den Außenrändern umlaufende metallische Profilleisten befestigt, die in ihren der Bodenöffnung benachbarten, einander gegenüberliegenden Endbereichen einander zugewandte Halteabschnitte für Montage-Enden der Trägerstangen des Stoffbodens bilden. Bei bekannten Anordnungen (z.B. DE 200 20 061 U1) verlaufen die Trägerstangen geradlinig zwischen den Halteabschnitten der Profilleisten und deshalb auf dem Niveau der unteren Außenränder des Faltenbalges. Die jeweils zwischen den Trägerstangen durchhängenden Sickenfalten des Bodentuches sind erforderlich, um auch im Bereich des Stoffbodens Relativbewegungen bei Kurvenfahrten und beim Überfahren von Hindemissen zu ermöglichen bzw. auszugleichen. Die nach unten durchhängenden Sickenfalten führen aber zu dem Nachteil, dass das Bodentuch mit den unteren Bereichen der Sickenfalten in Kontakt mit dem jeweiligen Untergrund (Straßenbelag) kommen und dann beschädigt werden kann.

Der vorliegenden Erfindung liegt die Aufgabe zu Grunde, zur Vermeidung der beschriebenen Nachteile den Bereich des Stoffbodens so zu verbessern, dass das Bodentuch vor Beschädigungen geschützt wird.

Erfindungsgemäß wird dies bei dem Stoffboden gemäß dem Anspruch 1 dadurch erreicht, dass zumindest bei einer Teilmenge der Trägerstangen des Stoffbodens zwischen ihren mit dem Faltenbalg verbundenen oder zu verbindenden Montage-Enden jeweils ein in Richtung des Innenraums nach oben portalartig verkröpfter Stützabschnitt für das Bodentuch gebildet ist. Jeder Stützabschnitt verläuft mit möglichst großer Länge geradlinig etwa parallel zu einer von den Montage-Enden definierten Achse. Vorteilhafterweise werden durch die Stützabschnitte die Sickenfalten des Bodentuches zumindest um das Maß der Verkröpfung der Trägerstangen angehoben, und zwar vorteilhafterweise unter Aufrechterhaltung ihrer vollen Sicken-Bogengröße und daher auch praktisch der vollständigen Flexibilität des Stoffbodens. Die dadurch angehobenen unteren Bereiche der Sickenfalten werden somit effektiv vor Beschädigungen durch Kontakt mit der Straße geschützt.

Eine erfindungsgemäße Faltenbag-Anordnung ist durch die Merkmale des Anspruchs 4 definiert.

Vorteilhafte Ausgestaltungsmerkmale der Erfindung sind in den von den Ansprüchen 1 und 4 jeweils abhängigen Ansprüchen enthalten.

Anhand eines bevorzugten, in der Zeichnung veranschaulichten Ausführungsbeispiels soll die Erfindung im Folgenden genauer erläutert werden. Dabei zeigen:
- Fig. 1: eine erfindungsgemäße Faltenbalg-Anordnung in einer Vorderansicht (Ansicht in Richtung einer Fahrzeug-Längsachse), jedoch ohne ein Bodentuch im Bereich einer unteren Bodenöffnung des Faltenbalges,
- Fig. 2: eine vergrößerte Perspektivansicht eines unteren Teilbereiches des Faltenbalges, und zwar in einer Ansicht auf die Innenseite gemäß Pfeil II in Fig. 1,
- Fig.3: eine Seitenansicht einer erfindungsgemäßen Trägerstange des Stoffbodens,
- Fig. 4: eine Teil-Vorderansicht des Faltenbalges in Pfeilrichtung IV gemäß Fig. 2 mit einem Teil einer daran befestigten erfindungsgemäßen Trägerstange,
- Fig. 5: einen vereinfachten Schnitt im Bereich einer Trägerstange in der Ebene V-V in Fig. 4 und
- Fig. 6: einen weiteren Querschnitt in der Ebene V-V gemäß Fig. 4 mit Darstellung eines Bereiches der gesamten Faltenbalg-Anordnung mit einem auf den Trägerstangen liegenden Bodentuch.

In den verschiedenen Figuren der Zeichnung sind gleiche Teile stets mit den gleichen Bezugszeichen versehen.

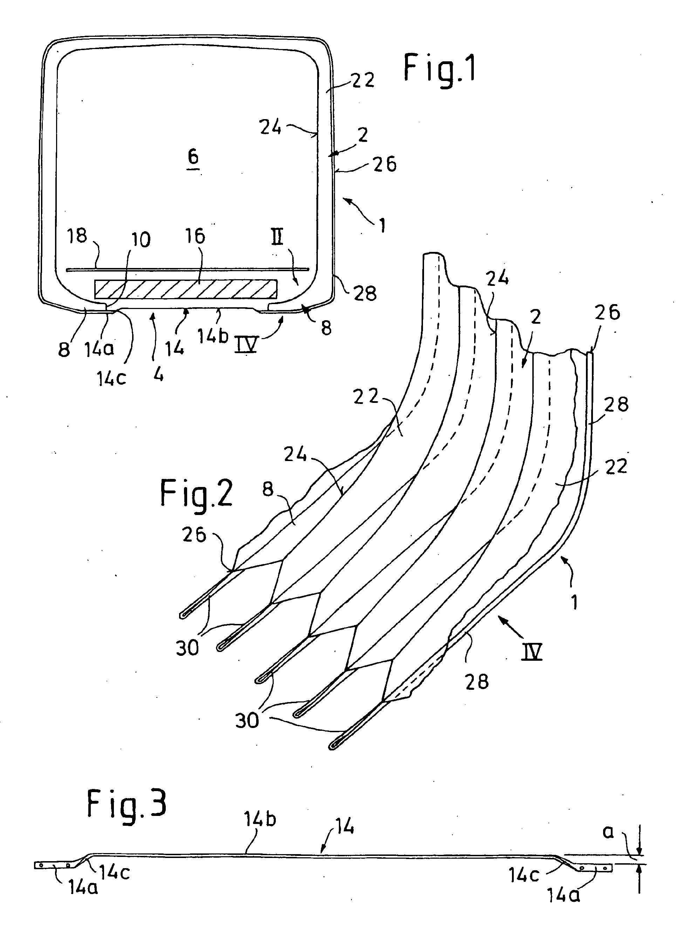

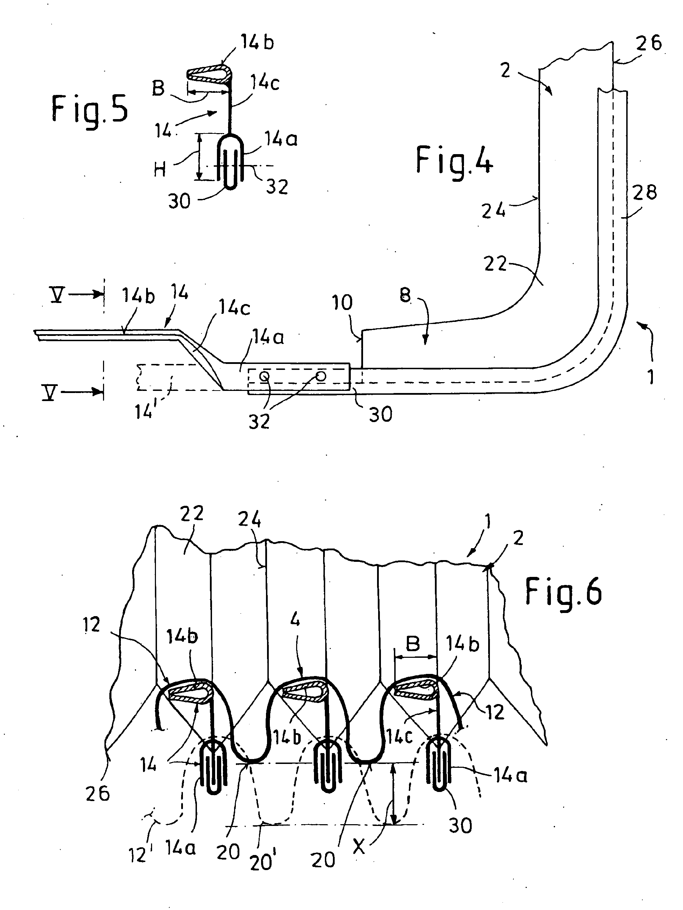

Wie sich zunächst aus Fig. 1 ergibt, besteht eine erfindungsgemäße Faltenbalg-Anordnung 1 aus einem Faltenbalg 2 und einem Stoffboden 4 (s. auch Fig. 6). Der Faltenbalg 2 wird bei einem nicht dargestellten Gelenkfahrzeug zwischen einem Vorderwagen und einem Hinterwagen so angeordnet, dass er einen Fahrzeug-Innenraum 6 nach oben und seitlich zur Bildung eines Durchgangs etwa rechteckförmig umschließt. Im unteren Bereich gehen die seitlichen Bereiche des Faltenbalges 2 in zwei untere Randabschnitte 8 über, die aufeinander zu nach innen ragen und zwischen sich eine untere Bodenöffnung 10 freilassen. Die Bodenöffnung 10 wird dann von dem Stoffboden 4 überdeckt. Dazu besteht der Stoffboden 4 gemäß Fig. 6 aus einem flexiblen Bodentuch 12 und mehreren Trägerstangen 14. In Fig. 1 ist nur eine der Trägerstangen 14 erkennbar; das Bodentuch 12 ist in Fig. 1 nicht eingezeichnet.

In Fig. 1 ist beispielhaft angedeutet, dass der Stoffboden 4 unterhalb eines Drehgelenkes 16 angeordnet ist, wobei das Drehgelenk 16 Vorder- und Hinterwagen des Gelenkfahrzeuges gelenkig miteinander verbindet. Oberhalb des Drehgelenkes 16 ist innerhalb des Fahrzeugs ein stabiler, begehbarer Boden 18 zum Übergang zwischen den Fahrzeugteilen angeordnet.

Wie sich weiterhin aus Fig. 1, 4 und 5 ergibt, ist jede Trägerstange 14 über endseitige Montage-Enden 14a an dem Faltenbalg 2 befestigt bzw. zu befestigen, und zwar im Bereich der unteren Randabschnitte 8. Die Trägerstangen 14 sind dann - bei unausgelenktem Faltenbalg 2 - etwa parallel voneinander beabstandet und definieren eine im Wesentlichen horizontale Tragebene für das Bodentuch 12. Wie sich aus Fig. 6 ergibt, liegt das Bodentuch 12 unter Bildung von zwischen den Trägerstangen 14 nach unten taschenartig durchhängenden Sickenfalten 20 auf den Trägerstangen 14 auf.

Erfindungsgemäß ist nun zumindest bei einer Teilmenge der Trägerstangen 14 vorgesehen, dass jeweils im Bereich zwischen den Montage-Enden 14a ein in Richtung des Innenraums 6 nach oben portalartig verkröpfter Stützabschnitt 14b für das Bodentuch 12 gebildet ist. Gemäß Fig. 3 verläuft der Stützabschnitt 14b geradlinig mit möglichst großer Länge zwischen den Montage-Enden 14a. Das Maß der Verkröpfung ist mit "a" eingezeichnet.

Der Faltenbalg 2 besteht aus zickzackförmigen Materialfalten 22 mit dem Innenraum 6 zugewandten Innenrändern 24 und gegenüberliegenden Außenrändern 26. Auf den Außenrändern 26 sind umlaufende metallische Profilleisten 28 befestigt. Die Profilleisten 28 sind bevorzugt von U-förmigen Klemmprofilen aus Aluminium gebildet. Im Bereich der unteren Randabschnitte 8 des Faltenbalges 2 verlaufen die Profilleisten 28 über die Materialfalten 22 hinausragend in den Bereich der Bodenöffnung 10, wobei die Endbereiche einander zugewandte Halteabschnitte 30 für die Montage-Enden 14a der Trägerstangen 14 des Stoffbodens 4 bilden. Zweckmäßig ist für jede Materialfalte 22 des Faltenbalges 2 und für jede zugehörige Profilleiste 28 zwischen deren Halteabschnitten 30 eine Trägerstange 14 vorhanden. Somit ist jede Falte 22 unten im Bereich der Bodenöffnung 10 durch eine Trägerstange 14 geschlossen, indem auf den Trägerstangen 14 das Bodentuch 12 aufliegt. Dabei liegt das Bodentuch 12 auch mit seinen seitlichen Randbereichen auf den Innenseiten der Materialfalten 22 des Faltenbalges 2 auf und ist dort mechanisch über geeignete Haltemittel befestigt, folgt dem Faltenverlauf des Faltenbalges 2, so dass die Bodenöffnung 10 relativ dicht durch das Bodentuch 12 verschlossen ist

In vorteilhafter Ausgestaltung der Erfindung besteht jede Trägerstange 14 aus einer metallischen, flachen U-Profilschiene, wobei die Montage-Enden 14a mit den Halteabschnitten 30 der Rand-Profilleisten 28 des Faltenbalges 2 verbunden sind, indem die im Profil umgekehrt U-förmigen Montage-Enden 14a die bevorzugt ebenfalls flach U-förmigen Halteabschnitte 30 übergreifen und über Befestigungselemente, insbesondere Verschraubungen 32 befestigt sind. Hierzu wird insbesondere auf Fig. 4 bis 6 verwiesen.

In weiterer bevorzugter Ausgestaltung sind die Trägerstangen 14 in Übergangsbereichen 14c zwischen den Stützabschnitten 14b und den angrenzenden Montage-Enden 14a zusätzlich zu den Verkröpfungen derart tordiert, dass die Stützabschnitte 14b eine vergrößerte, etwa der Höhe H des U-Profils im Bereich der Montage-Enden 14a entsprechende Auflagebreite B (s. Fig. 5 und 6) für das Bodentuch 12 aufweisen.

In den Fig. 4 und 6 ist zusätzlich gestrichelt angedeutet, dass bekannte Trägerstangen 14' die Halteabschnitten 30 der Profilleisten 28 geradlinig verbinden, so dass gemäß Fig. 6 das dort gestrichelt eingezeichnete Bodentuch 12' mit seinen Sickenfalten 20' relativ weit nach unten durchhängt. Demgegenüber kann durch die erfindungsgemäße Ausgestaltung der Trägerstangen 14 eine Anhebung des Bodentuches 12 im Bereich der Sickenfalten 20 um eine vertikale Höhendifferenz X erreicht werden, die beispielsweise im Bereich von etwa 30 bis 40 mm, insbesondere etwa 35 mm liegen kann. Damit liegen die Sickenfalten 20 vorteilhafterweise sogar auf einem höheren Niveau als die unteren Außenränder 26 des Faltenbalges 2 mit den Profilleisten 28 und den Halteabschnitten 30. Die Höhendifferenz X entspricht zumindest dem Maß "a" der Verkröpfung der Trägerstangen 14 gemäß Fig. 3. Durch die zusätzlich Torsion und die größere Auflagebreite B wird aber erreicht, dass X sogar größer als a ist (X>a).

## Patentansprüche

1. Stoffboden (4) für eine Faltenbalg-Anordnung (1) für Gelenkfahrzeuge, bestehend aus einem flexiblen Bodentuch (12) und mehreren Trägerstangen (14), wobei die Trägerstangen (14) in einer etwa horizontalen, voneinander etwa parallel beabstandeten Anordnung beidendig mit einem Faltenbalg (2) zu verbinden sind, und wobei das Bodentuch (12) unter Bildung von zwischen den Trägerstangen (14) durchhängenden Sickenfalten (20) auf die Trägerstangen (14) aufzulegen ist,
**dadurch gekennzeichnet, dass** zumindest eine Teilmenge der vorhandenen Trägerstangen (14) zwischen ihren mit dem Faltenbalg (2) zu verbindenden Montage-Enden (14a) jeweils einen nach oben verkröpften Stützabschnitt (14b) für das Bodentuch (12) aufweisen.

2. Stoffboden nach Anspruch 1,
**dadurch gekennzeichnet, dass** jede Trägerstange (14) aus einer metallischen, flachen U-Profilschiene besteht, wobei die Montage-Enden (14a) mit Halteabschnitten (30) von Rand-Profilleisten (28) des Faltenbalges (2) verbindbar sind, indem die im Profil umgekehrt U-förmigen Montage-Enden (14a) die Halteabschnitte (30) der Profilleisten (28) übergreifen und über Befestigungselemente, insbesondere Verschraubungen (32), befestigbar sind.

3. Stoffboden nach Anspruch 1 oder 2,
**dadurch gekennzeichnet, dass** die Trägerstangen (14) in Übergangsabschnitten (14c) zwischen den Stützabschnitten (14b) und den Montage-Enden (14a) derart tordiert sind, dass die Stützabschnitte (14b) eine vergrößerte, vorzugsweise etwa der Höhe (H) im Bereich der Montage-Enden (14a) entsprechende Auflagebreite (B) für das Bodentuch (12) aufweisen.

4. Faltenbalg-Anordnung (1) für Gelenkfahrzeuge, mit einem einen Innenraum (6) bis auf eine untere Bodenöffnung (10) umschließenden Faltenbalg (2) und einem die Bodenöffnung (10) überdeckenden Stoffboden (4) nach einem der Ansprüche 1 bis 3, wobei auf den beidendig mit dem Faltenbalg (2) verbundenen und voneinander beabstandeten Trägerstangen (14) das Bodentuch (12) unter Bildung von zwischen den Trägerstangen (14) durchhängenden Sickenfalten (20) aufliegt.

5. Faltenbalg-Anordnung nach Anspruch 4,
**dadurch gekennzeichnet, dass** der Faltenbalg (2) aus Materialfalten (22) mit dem Innenraum (6) zugewandten Innenrändem (24) und gegenüberliegenden Außenrändern (26) besteht, wobei auf den Außenrändern (26) umlaufende metallische Profilleisten (28) befestigt sind, die in ihren der Bodenöffnung (10) benachbarten, einander gegenüberliegenden Endbereichen einander zugewandte Halteabschnitte (30) für die Montage-Enden (14a) der Trägerstangen (14) des Stoffbodens (4) bilden.

6. Faltenbalg-Anordnung nach Anspruch 5,
**dadurch gekennzeichnet, dass** fürjedeMaterialfalte(22)des Faltenbalges (2) und für jede zugehörige Profilleiste (28) zwischen deren Halteabschnitten (30) eine Trägerstange (14) des Stoffbodens (4) vorhanden ist.

7. Faltenbalg-Anordnung nach einem der Ansprüche 4 bis 6,
**dadurch gekennzeichnet, dass** das Bodentuch (12) mit seinen seitlichen Randbereichen auf den Innenseiten der Materialfalten (22) des Faltenbalges (2) aufliegt und mechanisch über Haltemittel befestigt ist.

## Claims

1. A material base (4) for a bellows arrangement (1) for articulated vehicles, consisting of a flexible base cloth (12) and a plurality of support rods (14), the support rods (14) being connected in an approximately horizontal arrangement spaced apart approximately parallel from each other at both ends to a bellows (2), and the base cloth (12) being laid on the support rods (14), forming corrugated folds (20) which hang down between the support rods (14), **characterised in that** at least a portion of the support rods (14) present in each case have a support section (14b) for the base cloth (12) which is cranked upwards between their mounting ends (14a) which are to be connected to the bellows (2).

2. A material base according to Claim 1, **characterised in that** each support rod (14) consists of a metallic, flat U-profile rail, the mounting ends (14a) being able to be connected to holding sections (30) of edge profile bars (28) of the bellows (2), **in that** the mounting ends (14a) which are reverse U-shaped in profile engage over the holding sections (30) of the profile bars (28) and can be fastened by fastening elements, in particular screw connections (32).

3. A material base according to Claim 1 or 2, **characterised in that** the support rods (14), in transitional sections (14c) between the supporting sections (14b) and the mounting ends (14a), are twisted such that the supporting sections (14b) have an enlarged supporting width (B), preferably corresponding approximately to the height (H) in the region of the mounting ends (14a), for the base cloth (12).

4. A bellows arrangement (1) for articulated vehicles, with a bellows (2) which surrounds an inner space (6) as far as a lower base opening (10) and a material base (4), covering the base opening (10), according to one of Claims 1 to 3, with the base cloth (12), lying on the support rods (14) which are connected at both ends to the bellows (2) and are spaced apart from each other, forming corrugated folds (20) which hang down between the support rods (14).

5. A bellows arrangement according to Claim 4, **characterised in that** the bellows (2) consists of folds of material (22) with inner edges (24) facing the inner space (6) and opposing outer edges (26), with circumambient metallic profile bars (28) being fastened on the outer edges (26), which bars in their end regions which are adjacent to the base opening (10) and which lie opposite each other form holding sections (30) which face each other for the mounting ends (14a) of the support rods (14) of the material base (4).

6. A bellows arrangement according to Claim 5, **characterised in that** for each fold of material (22) of the bellows (2) and for each associated profile bar (28) a support rod (14) of the material base (4) is present between the holding sections (30) thereof.

7. A bellows arrangement according to one of Claims 4 to 6, **characterised in that** the base cloth (12) with its lateral edge regions lies on the insides of the folds of material (22) of the bellows (2) and is fastened mechanically via holding means.

## Revendications

1. Plancher en toile (4) pour un système de soufflet d'intercirculation (1) entre des véhicules articulés, formé par une toile (12) flexible et plusieurs barres de support (14), lesdites barres de support (14), situées à distance parallèlement entre elles, étant destinées à être reliées par leurs deux extrémités à un soufflet (2) dans un agencement sensiblement horizontal, et la toile de plancher (12) étant destinée à être posée sur les barres de support (14) moyennant la formation de cannelures (20) lâches entres les barres de support (14),
**caractérisé en ce qu'**au moins une partie des barres de support (14) présentes comportent entre leurs extrémités de montage (14a), destinée à être assemblées au soufflet (2), respectivement un tronçon de support (14b) replié vers le haut pour la toile de plancher (12).

2. Plancher en toile selon la revendication 1, **caractérisé en ce que** chaque barre de support (14) est formée par un profilé en U plat métallique, les extrémités de montage (14a) pouvant être assemblées à des tronçons de fixation (30) des tiges profilées (28) en bordure du soufflet (2), du fait que les extrémités de montage (14a), avec un profil en forme de U renversé, s'engagent au-dessus des tronçons de fixation (30) des tiges profilées (28) et peuvent être fixées par des éléments de fixation, en particulier des assemblages vissés (32).

3. Plancher en toile selon la revendication 1 ou 2, **caractérisé en ce que** les barres de support (14), dans les tronçons de transition (14c) entre les tronçons de support (14b) et les extrémités de montage (14a), sont tordues de telle sorte que les tronçons de support (14b) comportent pour la toile de plancher (12) une largeur d'appui (B) agrandie, correspondant de préférence à peu près à la hauteur (H) dans la zone des extrémités de montage (14a).

4. Système de soufflet d'intercirculation (1) entre des véhicules articulés, comportant un soufflet (2), entourant un espace intérieur (6) à l'exception d'une ouverture de plancher (10) inférieure, et un plancher en toile (4) selon l'une quelconque des revendications 1 à 3 recouvrant l'ouverture de plancher (10), la toile (12) étant posée sur les barres de support (14) situées à distance l'une de l'autre, assemblées par leurs deux extrémités au soufflet (2), moyennant la formation de cannelures (20) lâches entre les barres de support (14).

5. Système de soufflet d'intercirculation selon la revendication 4, **caractérisé en ce que** le soufflet (2) est formé par des plis (22) avec des bords intérieurs (24), orientés vers l'espace intérieur (6), et des bords extérieurs (26) opposés, des tiges profilées (28) métalliques périphériques étant fixées sur les bords extérieurs (26), lesquelles, dans leurs zones d'extrémité opposées et adjacentes à l'ouverture de plancher (10), forment des tronçons de fixation (30) orientés les uns vers les autres pour les extrémités de montage (14a) des barres de support (14) du fond en toile (4).

6. Système de soufflet d'intercirculation selon la revendication 5, **caractérisé en ce que** pour chaque pli (22) du soufflet (2) et pour chaque tige profilée (28) correspondante, il est prévu une barre de support (14) du plancher en toile (4), disposée entre les tronçons de fixation (30) de ladite tige profilée.

7. Système de soufflet d'intercirculation selon l'une quelconque des revendications 4 à 6, **caractérisé en ce que** la toile de plancher (12) repose avec ses bords latéraux sur les faces intérieures des plis (22) du soufflet (2) et est fixée mécaniquement par l'intermédiaire de moyens de fixation.
